# EUROPÄISCHE PATENTSCHRIFT

(11) **EP 1 276 563 B1**
(45) Veröffentlichungstag und Bekanntmachung des Hinweises auf die Patenterteilung: **30.06.2004**
(21) Anmeldenummer: 01933839.1
(22) Anmeldetag: 17.04.2001
(51) Int. Cl.: B01J 27/26, C08G 65/10, C08G 65/26

(54) **VERFAHREN ZUR HERSTELLUNG VON DMC-KATALYSATOREN**
METHOD FOR PRODUCING DOUBLE METAL CYANIDE (DMC) CATALYSTS
PROCEDE DE PRODUCTION DE CATALYSEURS A BASE DE CYANURE METALLIQUE DOUBLE

(30) Priorität: 20.04.2000 DE 10019898
(43) Veröffentlichungstag der Anmeldung: 22.01.2003
(73) Patentinhaber: Bayer MaterialScience AG, 51368 Leverkusen (DE)
(72) Erfinder: HOFMANN, Jörg, 47829 Krefeld (DE); EHLERS, Stephan, West Chester, PA 19382 (US); KLINKSIEK, Bernd, 51429 Bergisch Gladbach (DE); FECHTEL, Thorsten, 50858 Köln (DE); RUHLAND, Matthias Dr., 51375 Leverkusen (DE); SCHOLZ, Jürgen, 51375 Leverkusen (DE); FÖHLES, Franz, 47918 Tönisvorst (DE); ESSER, Ulrich, 51515 Kürten (DE)
(86) Internationale Anmeldenummer: PCT/EP2001/004342
(87) Internationale Veröffentlichungsnummer: WO 2001/080994

(56) Entgegenhaltungen:
- EP-A- 1 029 871
- WO-A-99/19063
- WO-A-99/56874
- US-A- 5 731 407

## Beschreibung

Die Erfindung betrifft ein verbessertes Verfahren zur Herstellung von Doppelmetallcyanid(DMC)-Katalysatoren für die Herstellung von Polyetherpolyolen durch Polyaddition von Alkylenoxiden an aktive Wasserstoffatome aufweisende Starterverbindungen.

Doppelmetallcyanid (DMC)-Katalysatoren für die Polyaddition von Alkylenoxiden an aktive Wasserstoffatome aufweisende Starterverbindungen sind seit langem bekannt (siehe beispielsweise US-A 3 404 109, US-A 3 829 505, US-A 3 941 849 und US-A 5 158 922). Der Einsatz dieser DMC-Katalysatoren für die Herstellung von Polyetherpolyolen bewirkt insbesondere eine Reduzierung des Anteils an monofunktionellen Polyethern mit endständigen Doppelbindungen, sogenannten Monoolen, im Vergleich zu der konventionellen Herstellung von Polyetherpolyolen mittels Alkali-Katalysatoren, wie Alkalihydroxiden. Die so erhaltenen Polyetherpolyole können zu hochwertigen Polyurethanen (z.B. Elastomere, Schäume, Beschichtungen) verarbeitet werden.

DMC-Katalysatoren werden gewöhnlich erhalten, indem man eine wässrige Lösung eines Metallsalzes mit der wässrigen Lösung eines Metallcyanidsalzes in Gegenwart eines organischen Komplexliganden, z.B. eines Ethers, umsetzt. In einer typischen Katalysatorpräparation werden beispielsweise wässrige Lösungen von Zinkchlorid (im Überschuss) und Kaliumhexacyanocobaltat gemischt und anschließend Dimethoxyethan (Glyme) zur gebildeten Dispersion gegeben. Nach Filtration und Waschen des Katalysators mit wässriger Glyme-Lösung wird ein aktiver Katalysator der allgemeinen Formel

Zn₃[Co(CN)₆]₂ • x Z_{N}Cl₂ • y H₂O • z Glyme

erhalten (siehe z.B. EP-A 700 949).

Nach dem Stand der Technik werden die DMC-Katalysatoren hergestellt, indem z.B. in einem Rührkessel wässrige Lösungen eines Metallsalzes (bevorzugt eines Zinksalzes wie z.B. Zinkchlorid) und eines Metallcyanidsalzes (z.B. Kaliumhexacyanocobaltat) in Gegenwart eines organischen Komplexliganden (bevorzugt tert.-Butanol) und ggf. weiterer Liganden unter Bildung einer Dispersion gemischt werden. Die Isolierung des Katalysators aus der Dispersion erfolgt durch bekannte Techniken, bevorzugt durch Zentrifugation oder Filtration. Um eine ausreichend hohe Katalysatoraktivität zu erzielen, ist es erforderlich, den Katalysator anschließend mit einer wässrigen Ligandenlösung zu waschen. Durch diesen Waschschritt werden wasserlösliche Nebenprodukte, wie z.B. Kaliumchlorid, welche die Katalysatoraktivität mindern können, aus dem Katalysator entfernt. Nach dem Stand der Technik wird dieser Waschschritt durch Redispergieren des Katalysators in einer wässrigen Ligandenlösung z.B. in einem Rührkessel durchgeführt, mit anschließender erneuter Feststoffisolierung durch z.B. Zentrifugation oder Filtration. Um hochaktive DMC-Katalysatoren zu erhalten, ist es i.A. erforderlich, den Katalysator noch mindestens ein weiteres Mal zu waschen, wobei für die weiteren Waschvorgänge bevorzugt nichtwässrige Ligandenlösungen verwendet werden. Nach dem Stand der Technik werden auch die weiteren Waschschritte durch Redispergieren mit anschließender Isolierung des Katalysators durchgeführt. Abschließend muss der DMC-Katalysator getrocknet werden. Diese Form der Katalysatorherstellung ist außerordentlich zeitaufwendig und kostenintensiv. Für die DMC-Katalysatorherstellung im kommerziellen Maßstab werden Prozesszeiten von über 100 Stunden benötigt (siehe z.B. US-A 5 900 384). Aufgrund der hohen Katalysatorkosten ist deshalb die Wirtschaftlichkeit des DMC-katalysierten Verfahrens der Polyetherpolyol-Herstellung erheblich beeinträchtigt.

Es wurde nun gefunden, dass hochaktive DMC-Katalysatoren nach einem wesentlich vereinfachten Verfahren erhalten werden können, bei dem zunächst wässrige Lösungen eines Metallsalzes und eines Metallcyanidsalzes in Gegenwart eines organischen Komplexliganden a) und ggf. einer oder mehrerer weiterer komplexbildender Komponenten b) unter Bildung einer DMC-Katalysatordispersion umgesetzt werden, diese Dispersion dann filtriert, der Filterkuchen anschließend durch Filterkuchenwäsche gewaschen wird und der gewaschene Filterkuchen abschließend nach einem optionalen Auspressen bzw. mechanischen Entfeuchten getrocknet wird.

Dieses verbesserte Katalysatorherstellverfahren vermeidet das nach dem bisherigen Stand der Technik zur Herstellung hochaktiver DMC-Katalysatoren erforderliche mehrmalige Redispergieren des Katalysators mit anschließender Isolierung und führt deshalb zu einer wesentlichen Verkürzung der Prozesszeiten der DMC-Katalysatorherstellung. DMC-Katalysatoren, die nach dem neuen, verbesserten Verfahren hergestellt werden, besitzen vergleichbare Aktivität wie DMC-Katalysatoren, die nach dem bisherigen Stand der Technik deutlich aufwendiger hergestellt werden.

Gegenstand der vorliegenden Erfindung ist daher ein verbessertes Verfahren zur Herstellung von Doppelmetallcyanid(DMC)-Katalysatoren, bei dem zunächst wässrige Lösungen eines Metallsalzes und eines Metallcyanidsalzes in Gegenwart eines organischen Komplexliganden a) und ggf. einer oder mehrerer weiterer komplexbildender Komponenten b) unter Bildung einer DMC-Katalysatordispersion umgesetzt werden, diese Dispersion dann filtriert, der Filterkuchen anschließend mit einer oder mehreren, wässrigen oder nichtwässrigen Lösungen des organischen Komplexliganden a) und ggf. einer oder mehreren weiteren komplexbildenden Komponenten b) durch Filterkuchenwäsche gewaschen wird und der gewaschene Filterkuchen abschließend nach einem optionalen Auspressen bzw. mechanischen Entfeuchten getrocknet wird.

Die in den für das erfindungsgemäße Verfahren geeigneten DMC-Katalysatoren enthaltenen Doppelmetallcyanid-Verbindungen sind die Reaktionsprodukte wasserlöslicher Metallsalze und wasserlöslicher Metallcyanidsalze.

Zur Herstellung der Doppelmetallcyanid-Verbindungen geeignete wasserlösliche Metallsalze besitzen bevorzugt die allgemeine Formel (I)

M(X)ₙ (I),

wobei M ausgewählt wird aus den Metallen Zn (II), Fe (II), Ni (II), Mn (II), Co (II), Sn (II), Pb (II), Fe (III), Mo (IV), Mo (VI), Al (III), V (V), V (IV), Sr (II), W (IV), W (VI), Cu (II) und Cr (III). Besonders bevorzugt sind Zn (II), Fe (II), Co (II) und Ni (II). X sind gleiche oder verschiedene, vorzugsweise gleiche Anionen, bevorzugt ausgewählt aus der Gruppe der Halogenide, Hydroxide, Sulfate, Carbonate, Cyanate, Thiocyanate, Isocyanate, Isothiocyanate, Carboxylate, Oxalate oder Nitrate. Der Wert für n ist 1, 2 oder 3.

Beispiele geeigneter wasserlöslicher Metallsalze sind Zinkchlorid, Zinkbromid, Zinkacetat, Zinkacetylacetonat, Zinkbenzoat, Zinknitrat, Eisen(II)sulfat, Eisen(II)bromid, Eisen(II)chlorid, Cobalt(II)chlorid, Cobalt(II)thiocyanat, Nickel(II)chlorid und Nickel(II)nitrat. Es können auch Mischungen verschiedener wasserlöslicher Metallsalze eingesetzt werden.

Zur Herstellung der Doppelmetallcyanid-Verbindungen geeignete wasserlösliche Metallcyanidsalze besitzen bevorzugt die allgemeine Formel (II)

(Y)ₐ M'(CN)_{b} (A)_{c} (II),

wobei M' ausgewählt wird aus den Metallen Fe(II), Fe(III), Co(II), Co(III), Cr(II), Cr(III), Mn(II), Mn(III), Ir(III), Ni(II), Rh(III), Ru(II), V(IV) und V(V). Besonders bevorzugt wird M' ausgewählt aus den Metallen Co(II), Co(III), Fe(II), Fe(III), Cr(III), Ir(III) und Ni(II). Das wasserlösliche Metallcyanidsalz kann eines oder mehrere dieser Metalle enthalten. Y sind gleiche oder verschiedene, vorzugsweise gleiche Alkalimetallkationen oder Erdalkalimetallkationen. A sind gleiche oder verschiedene, vorzugsweise gleiche Anionen, ausgewählt aus der Gruppe der Halogenide, Hydroxide, Sulfate, Carbonate, Cyanate, Thiocyanate, Isocyanate, Isothiocyanate, Carboxylate, Oxalate oder Nitrate. Sowohl a, als auch b und c sind ganzzahlig, wobei die Werte für a, b und c so gewählt sind, dass die Elektroneutralität des Metallcyanidsalzes gegeben ist; a ist vorzugsweise 1, 2, 3 oder 4; b ist vorzugsweise 4, 5 oder 6; c besitzt bevorzugt den Wert 0. Beispiele geeigneter wasserlöslicher Metallcyanidsalze sind Kaliumhexacyanocobaltat(III), Kaliumhexacyanoferrat(II), Kaliumhexacyanoferrat(III), Calciumhexacyanocobaltat(III) und Lithiumhexacyanocobaltat(III).

Bevorzugte Doppelmetallcyanid-Verbindungen, die in den DMC-Katalysatoren enthalten sind, sind Verbindungen der allgemeinen Formel (III)

Mₓ[M'ₓ,(CN)_{y}]_{z} (III),

worin M wie in Formel (I) und M' wie in Formel (II) definiert ist, und x, x', y und z ganzzahlig und so gewählt sind, dass die Elektroneutralität der Doppelmetallcyanidverbindung gegeben ist. Vorzugsweise ist x = 3, x' = 1, y = 6 und z = 2, M = Zn(II), Fe(II), Co(II) oder Ni(II) und M' = Co(III), Fe(III), Cr(III) oder Ir(III).

Beispiele geeigneter Doppelmetallcyanidverbindungen sind Zinkhexacyanocobaltat(III), Zinkhexacyanoiridat(III), Zinkhexacyanoferrat(III) und Cobalt(II)hexacyanocobaltat(III). Weitere Beispiele geeigneter Doppelmetallcyanid-Verbindungen sind z.B. US-A 5 158 922 zu entnehmen. Besonders bevorzugt verwendet wird Zinkhexacyanocobaltat(III).

Organische Komplexliganden a), die in dem erfindungsgemäßen Verfahren eingesetzt werden können, sind wasserlösliche, organische Verbindungen mit Heteroatomen, wie Sauerstoff, Stickstoff, Phosphor oder Schwefel, die mit der Doppelmetallcyanid-Verbindung Komplexe bilden können. Geeignete organische Komplexliganden sind z.B. Alkohole, Aldehyde, Ketone, Ether, Ester, Amide, Harnstoffe, Nitrile, Sulfide und deren Mischungen. Bevorzugte organische Komplexliganden sind wasserlösliche aliphatische Alkohole, wie Ethanol, Isopropanol, n-Butanol, iso-Butanol, sek.-Butanol und tert.-Butanol. Besonders bevorzugt ist tert.-Butanol.

Der organische Komplexligand a) wird entweder während der Katalysatorpräparation zugegeben oder unmittelbar nach Bildung der Dispersion der Doppelmetallcyanidverbindung. Gewöhnlich wird der organische Komplexligand a) im Überschuss eingesetzt.

Bevorzugt für das erfindungsgemäße Verfahren sind DMC-Katalysatoren, die neben den oben angeführten organischen Komplexliganden a) noch eine oder mehrere weitere organische komplexbildende Komponenten b) enthalten. Diese Komponente b) kann aus den gleichen Klassen von Verbindungen ausgewählt werden wie Komplexligand a). Bevorzugt ist Komponente b) ein Polyether, Polyester, Polycarbonat, Glycidylether, Glycosid, Carbonsäureester mehrwertiger Alkohole, Polyalkylenglykolsorbitanester, eine Gallensäure oder deren Salz, Ester oder Amid, ein Cyclodextrin, organisches Phophat, Phosphit, Phosphonat, Phosphonit, Phosphinat oder Phosphinit, eine ionische oberflächen- bzw. grenzflächenaktive Verbindung oder ein α,β-ungesättigter Carbonsäureester. DMC-Katalysatoren mit derartigen Ligandenkombinationen sind z.B. in EP-A 700 949, EP-A 761 708, WO 97/40086, WO 98/08073, WO 98/16310, WO 99/01203, WO 99/19062, WO 99/19063 oder der deutschen Patentanmeldung 19905611.0 beschrieben.

In den für das erfindungsgemäße Verfahren geeigneten DMC-Katalysatoren können gegebenenfalls noch Wasser und/oder ein oder mehrere wasserlösliche Metallsalze der Formel (I) aus der Herstellung der Doppelmetallcyanid-Verbindung enthalten sein.

Die Herstellung der DMC-Katalysatoren erfolgt üblicherweise in wässriger Lösung durch Umsetzung von Metallsalzen, insbesondere der Formel (I) mit Metallcyanidsalzen, insbesondere der Formel (II), organischen Komplexliganden
a) und ggf. einer oder mehrerer weiterer komplexbildender Komponenten b).

Bevorzugt werden dabei zunächst die wässrigen Lösungen des Metallsalzes (z.B. Zinkchlorid, eingesetzt im stöchiometrischen Überschuss (mindestens 50 Mol-% bezogen auf das Metallcyanidsalz)) und des Metallcyanidsalzes (z.B. Kaliumhexacyanocobaltat) in Gegenwart des organischen Komplexliganden a) (z.B. tert.-Butanol) umgesetzt, wobei sich eine Dispersion bildet.

Der organische Komplexligand a) kann dabei in der wässrigen Lösung des Metallsalzes und/oder des Metallcyanidsalzes vorhanden sein, oder er wird der nach Ausfällung der Doppelmetallcyanid-Verbindung erhaltenen Dispersion unmittelbar zugegeben.

Bevorzugt wird die gebildete Dispersion anschließend noch mit einer oder mehreren weiteren komplexbildenden Komponenten b) behandelt. Die weitere komplexbildende Komponente b) wird dabei bevorzugt in einer Mischung mit Wasser und organischem Komplexliganden a) eingesetzt.

Die Herstellung der DMC-Katalysatordispersion kann z.B. in einem Rührkessel erfolgen, gegebenenfalls nach der in US-A 5 891 818 beschriebenen Verfahrensvariante, bei der ein Teil der in einem Rührreaktor hergestellten Katalysatordispersion zirkuliert und in den Reaktorkopfraum gesprüht und der zirkulierende Strom dabei durch einen "high shear in-line mixer" geführt wird.

Bevorzugt erfolgt die Herstellung der DMC-Katalysatordispersion aber unter Einsatz einer Mischdüse (z.B. einer Glattstrahldüse, Levosdüse, Boschdüse und ähnlichem), besonders bevorzugt eines Strahldispergators, wie dies in der Deutschen Patentanmeldung 199 58 355.2 beschrieben ist.

In einer Glattstrahldüse wird ein erster Eduktstrom zunächst in einer Düse beschleunigt und mit hoher Strömungsgeschwindigkeit in einen langsam fließenden zweiten Eduktstrom verdüst. Die Vermischung der beiden Eduktströme erfolgt anschließend über den turbulenten Zerfall des resultierenden Strahls in Wirbel unterschiedlicher Größe (Wirbelkaskade). Im Vergleich zum Rührkessel können auf diese Weise Konzentrationsunterschiede deutlich schneller abgebaut werden, da deutlich größere und homogenere Leistungsdichten erzielt werden können.

Bevorzugt sollte für das erfindungsgemäße Verfahren jedoch ein Strahldispergator eingesetzt werden. Der Strahldispergator kann so aufgebaut sein, dass zwei Düsen hintereinander angeordnet sind. Ein erster Eduktstrom wird in der ersten Düse durch die Querschnittsverengung zunächst stark beschleunigt. Der beschleunigte Strahl saugt dabei aufgrund der hohen Strömungsgeschwindigkeit die zweite Komponente an. Der resultierende Strahl wird dann aus der Mischkammer durch weitere, senkrecht zur Richtung des ersten Eduktstroms angebrachte Düsen geleitet. Der Abstand der Düsen wird bevorzugt so gewählt werden, dass in der Mischkammer aufgrund der kurzen Verweilzeit nur Keimbildung jedoch kein Kristallwachstum erfolgt. Maßgeblich für die optimale Auslegung des Strahldispergators ist somit die Keimbildungsgeschwindigkeit des Feststoffs. Günstigerweise wird eine Verweilzeit von 0,0001 s bis 0,15 s, vorzugsweise 0,001 s bis 0,1 s eingestellt. Das Kristallwachstum erfolgt erst im Ablauf. Der Durchmesser der weiteren Düsen sollte bevorzugt so gewählt werden, dass dort eine weitere Beschleunigung der teilweise gemischten Edukteströme erfolgt. Aufgrund der dadurch in den weiteren Düsen zusätzlich auftretenden Scherkräfte wird im Vergleich zu einer Glattstrahldüse der Zustand der homogenen Vermischung durch einen schnelleren Wirbelzerfall in kürzerer Zeit erreicht. Dadurch ist es selbst bei Fällungsreaktionen mit sehr hoher Keimbildungsgeschwindigkeit möglich, den Zustand einer idealen Vermischung der Edukte zu erreichen, so dass die Einstellung von definierten stöchiometrischen Zusammensetzungen während der Fällungsreaktion möglich ist. Als günstig haben sich Düsendurchmesser von 5000 µm bis 50 µm, vorzugsweise 2000 µm bis 200 µm erwiesen bei Druckverlusten in der Düse von 0,1 bar bis 1000 bar oder Leistungsdichten im Bereich von 1*10⁷ W/m³ bis 1*10¹³ W/m^{3.}

Je nach gewünschter Partikelgröße können noch n Düsen (mit n = 1 - 5) nachgeschaltet werden, so dass man einen mehrstufigen Strahldispergator erhält. Der zusätzliche Vorteil weiterer Dispergatoren besteht darin, dass durch die großen Scherkräfte in den Düsen bereits gebildete Partikel mechanisch zerkleinert werden können. Auf diese Weise ist es möglich, Partikel mit Durchmessern von 20 µm bis 0,1 µm herzustellen. Anstelle mehrerer hintereinander geschalteter Düsen kann die Zerkleinerung aber auch durch Kreislaufführung der Dispersion erreicht werden.

Andere Mischorgane zur Herstellung von Dispersionen, wie sie in EP-A 101 007, WO 95/30476 oder der Deutschen Patentanmeldung 199 28 123.8 beschrieben sind, oder Kombinationen dieser Mischorgane können ebenfalls eingesetzt werden.

Durch die Energiedissipation in den Düsen und durch die Kristallisationsenthalpie kann es zu einer Erwärmung der Dispersion kommen. Da die Temperatur einen wesentlichen Einfluss auf den Kristallbildungsprozess haben kann, kann für die isotherme Prozessführung hinter dem Mischorgan ein Wärmeübertrager eingebaut werden.

Ein problemloses Scale-up ist beispielsweise möglich durch den Einsatz einer größeren Zahl von Bohrungen, die Parallelschaltung mehrerer Mischorgane oder die Vergrößerung der freien Düsenfläche. Letzteres wird jedoch nicht durch eine Erhöhung des Düsendurchmessers erreicht, da auf diese Weise die Möglichkeit des Auftretens eines Kernstroms besteht, wodurch eine Verschlechterung des Mischergebnisses resultiert. Bei Düsen mit großen freien Düsenflächen sind deswegen bevorzugt Schlitze mit entsprechender Fläche einzusetzen.

Die Katalysatordispersion wird nun einem Aüfarbeitungsverfahren unterworfen, dessen Ziele die Katalysatorpartikelabtrennung, die Wäsche, die mechanische Entfeuchtung und die thermische Trocknung des Katalysators sind. Für jeden der einzelnen Verfahrensschritte existiert eine große Anzahl von Verfahren und apparativen Umsetzungen. Bevorzugt wird im erfindungsgemäßen Verfahren ein einzelner Apparat eingesetzt, in dem die genannten Schritte in ihrer Gesamtheit durchgeführt werden können.

Zur Abtrennung.,der Katalysatorpartikeln aus der Dispersion können alle bekannten Verfahren zur Filtration oder Sedimentation eingesetzt werden, wie sie z.B. in "Ullmann's Encyclopedia of Industrial Chemistry", Vol. B2, Kapitel 9 und 10, VCH, Weinheim 1988 und im "Handbuch der industriellen Fest-Flüssig-Trennung" ,Hrsg.: H. Gasper, D. Oechsle und E. Pongratz, Wiley-VCH-Verlag, Weinheim, 2000 beschrieben sind. Das treibende Potenzial zur Abtrennung kann durch Massenkräfte (Zentrifugalkraft, Schwerkraft), elektrische Kräfte oder Druckdifferenzen (Gasdifferenzdruck, hydraulischer Druck, mechanischer Druck) aufgebracht werden. Es kann sich dabei um kontinuierlich oder absatzweise arbeitende Apparate handeln.

Absatzweise und sedimentativ arbeitende Apparate sind beispielsweise Röhrenzentrifugen mit oder ohne Einbauten im Zentrifugenraum. Kontinuierlich arbeitende Varianten sind hoch eindickende Separatoren. Absatzweise filtrierend arbeiten beispielsweise Nutschen (Vakuum- oder Drucknutschen), Tellerdruckfilter, Kerzenfilter oder Filterpressen (Rahmen-, Kammer-, Membranfilterpressen, "Autopress" der BHS Sonthofen GmbH, D-87527 Sonthofen (s. GB-A 2282977), Pressfilterautomaten), aber auch Schäl- oder Stülpfilterzentrifugen. Kontinuierlich filtrierend arbeiten beispielsweise Vakuum-Bandfilter, Trommelfilter (Druck- oder Vakuum-), Scheibenfilter (Druck- oder Vakuum-), Querstromfilter oder dynamische Filter, aber auch Dekantierzentrifugen.

Bevorzugt werden diskontinuierlich arbeitende Filter oder filtrierende Zentrifugen eingesetzt. Als besonders günstig haben sich Membranfilterpressen erwiesen. Erforderlich für die Abtrennung ist eine Bestückung der Membranfilterpresse mit einem feinporigen Filtermedium, bevorzugt multifilen Geweben auf Polypropylenbasis, da diese gegenüber Lösemitteln wie tert.-Butanol beständig sind.

Die Abtrennung wird i.A. bei Temperaturen von 10°C bis 80°C durchgeführt. Die angelegten Druckdifferenzen können 0,001 bar bis 200 bar, bevorzugt 0,1 bar bis 100 bar, besonders bevorzugt 0,1 bar bis 25 bar betragen, wobei die eingesetzte Druckdifferenz von der eingesetzten Vorrichtung abhängig ist. Hieraus ergeben sich Filtrationszeiten von wenigen Minuten bis hin zu mehreren Stunden. Der feuchte Filterkuchen hat meist eine Restfeuchte von 30 % bis 95 %.

Im folgenden Verfahrensschritt wird der abgetrennte, aber noch durch wasserlösliche Nebenprodukte verunreinigte Katalysator gewaschen. Hierzu kommen prinzipiell eine Anmaisch- oder eine Filterkuchenwäsche (=Verdrängungswäsche) oder eine Kombination aus beidem in Frage. Im erfindungsgemäßen Verfahren wird bevorzugt mit einer oder mehreren wässrigen Lösungen des Komplexliganden a) und ggf. einer oder mehreren weiteren komplexbildenden Komponenten b) eine Verdrängungswäsche durchgeführt.

Besonders bevorzugt wird der feuchte Filterkuchen zunächst mit einer wässrigen Lösung des organischen Komplexliganden a) (z.B. tert.-Butanol) gewaschen. Auf diese Weise können wasserlösliche Nebenprodukte wie z.B. Kaliumchlorid aus dem Katalysator entfernt werden. Dabei beträgt die Menge des organischen Komplexliganden a) in der wässrigen Waschlösung bevorzugt 40 bis 80 Gew.-%, bezogen auf die Gesamtlösung. Bevorzugt ist es weiterhin, der wässrigen Waschlösung etwas an weiterer komplexbildender Komponente b) zuzufügen, besonders bevorzugt 0,5 bis 5 Gew.-%, bezogen auf die Gesamtlösung.

Die Durchströmungswäsche in der Filterapparatur bietet gegenüber der Anmaischwäsche Vorteile bezüglich des Zeitbedarfs für die Aufarbeitung. Zudem muss der lösungsmittelbehaftete Filterkuchen nicht wie bei der Anmaischwäsche aus dem Filter entnommen und in eine andere Apparatur überführt werden.

Varianten der Durchströmungswäsche auf der bevorzugt eingesetzten Membranfilterpresse sind die Spaltwäsche und die Wäsche durch den gesamten Kuchen. Bei der Spaltwäsche werden die Kammern der Filterpresse nicht vollständig mit Filterkuchen ausgefüllt, so dass zwischen beiden Filterkuchenhälften in der Filterkammer ein Spalt verbleibt. Über den Suspensionskanal wird die Waschflüssigkeit unter einem ausreichend großen Druck zugegeben, verteilt sich im Spalt, durchströmt den Filterkuchen und verlässt die Filterpresse durch die Filtratkanäle. Bei der Verdrängungswäsche durch den gesamten Kuchen werden im Anschluss an die Filtration durch Aufpumpen der Membranen der Membranfilterpresse die beiden Kuchenhälften zusammengeführt. Abhängig vom aufgebrachten Membranpressdruck findet eine Verdichtung des Filterkuchens statt. Der Membranpressdruck wird während der Wäsche aufrecht erhalten. Der Waschflüssigkeitsdruck ist bevorzugt kleiner als der Membranpressdruck zu wählen.

Bevorzugt wird im erfindungsgemäßen Verfahren die Spaltwäsche eingesetzt, da sie weniger Zeit erfordert und besonders homogene Katalysatoren von hoher Qualität liefert.

Bei der Wäsche wird eine Menge an Waschflüssigkeit eingesetzt, die einen möglichst vollständigen Austausch der im ursprünglichen Filterkuchen befindlichen Flüssigkeitsmenge bewirkt. Das eingesetzte Volumen an Waschflüssigkeit, bezogen auf das Filterkuchenvolumen beträgt i.a. 0,5 / 1 bis 1000/1, bevorzugt 1/1 bis 500/1, besonders bevorzugt 1/1 bis 50/1.

Die Spaltwäsche wird i.A. bei Temperaturen von 10°C bis 80°C, bevorzugt bei 15°C bis 60°C durchgeführt. Die angelegten Druckdifferenzen können 0,001 bar bis 200 bar, bevorzugt 0,1 bar bis 100 bar, besonders bevorzugt 0,1 bar bis 25 bar betragen. Die Waschzeiten betragen in der Regel wenige Minuten bis einige Stunden.

Nach diesem ersten Waschschritt können sich weitere Waschschritte mit wässrigen oder nichtwässrigen Lösungen des organischen Komplexliganden a) und gegebenenfalls einer oder mehreren weiteren komplexbildenden Komponenten b) anschließen, die erfindungsgemäß ebenfalls als Filterkuchenwäsche durchgeführt werden. Hierdurch kann die Aktivität des Katalysators weiter erhöht werden. Es hat sich allerdings gezeigt, dass in der Regel bereits die einmalige Wäsche des Filterkuchens mit einer wässrigen Lösung des organischen Komplexliganden a) und ggf. einer oder mehreren weiteren komplexbildenden Komponenten b) durch Filterkuchenwäsche ausreicht, um DMC-Katalysatoren mit außerordentlich hoher Aktivität zu erhalten.

Häufig ist bei dem erfindungsgemäßen Verfahren im Vergleich zu den Verfahren des Standes der Technik eine deutliche Reduktion der Gesamtmenge an einzusetzender Waschlösung möglich, so dass das erfindungsgemäße Verfahren auch zu einer Verringerung der Materialkosten bei der DMC-Katalysatorherstellung führt.

Zur weitgehenden Entfernung der Waschflüssigkeit aus den Filterkuchen, zwecks Verbesserung der Reinheit und Verringerung des Energieaufwandes bei der späteren thermischen Trocknung wird in einem weiteren Verfahrensschritt der Flüssigkeitsgehalt der Filterkuchen reduziert.

Hierzu bestehen die Möglichkeiten, das Porenvolumen der Filterkuchen durch Auspressen mittels Pressstempeln oder Membranen zu reduzieren, oder durch einen Gasdifferenzdruck oder durch Zentrifugalkräfte die Filterkuchen zu entfeuchten. Dies kann im selben Apparat wie die vorherige Aufarbeitung stattfinden (beispielweise Stülpfilterzentrifuge oder Membranfilterpresse) oder in einem zusätzlichen Apparat (beispielweise Schneckenpresse oder Röhrenfilterpresse). Die Flüssigkeit entweicht durch ein geeignetes Filtermedium.

Bevorzugt wird im erfindungsgemäßen Verfahren eine Membranfilterpresse eingesetzt. Als vorteilhaft hat sich das Auspressen in der Membranfilterpresse mit Membranpressdrücken zwischen 0,5 bar und 200 bar, bevorzugt bei möglichst hohen Drücken erwiesen. Angeschlossen werden kann eine Gasdifferenzdruckentfeuchtung bei anliegendem Membranpressdruck. Der Gasdruck kann geringer als der Membranpressdruck gewählt werden.

Der DMC-Katalysator wird anschließend bei Temperaturen von etwa 20 bis 120°C und bei Drücken von etwa 0,1 mbar bis Normaldruck (1013 mbar) getrocknet. Hierzu sind Kontakttrockner (beispielsweise Schaufeltrockner) und Konvektionstrockner (beispielsweise Bandtrockner) wie auch Sprühtrockner geeignet. Die Trocknung kann auch direkt in den Vorrichtungen zur mechanischen Flüssigkeitsabtrennung durchgeführt werden. Letzteres ist aus sicherheitstechnischen und arbeitshygienischen Gründen im erfindungsgemäßen Verfahren bevorzugt.

Beispiele für Filterapparate, in denen Produkte konvektiv getrocknet werden können, sind Kerzen-, Tellerdruck-, Trommel-, Scheiben- oder Bandfilter. Geeignete Filterzentrifugen sind Zentrifugentrockner oder Stülpfilterzentrifugen.

Beispiele für kombinierte Filterapparate und Kontakttrockner sind Rührwerksdrucknutsche und Kerzenfilter, in denen der Kuchen vor der Trocknung von der Kerze auf einen beheizten Boden abgeworfen und dort durchmischt werden.

Im Verfahren bevorzugt eingesetzt wird die beheizbare Filterpresse. Diese ist aufgebaut wie eine übliche Filterpresse mit Membranpaket. Konstruktiv unterscheiden sich die zu verwendenden Membranplatten von üblichen Membranplatten dadurch, dass ein Heizmedium den Raum hinter der Membran durchströmen kann. Bevorzugt werden flüssigkeitsdichte (sogenannte "tropf-" oder "gasdichte") Membranfilterplatten eingesetzt.

Das aufgeheizte Heizmedium strömt auf der Rückseite der Pressmembranen, vom Filterkuchen durch die Pressmembran und das Filtermedium vollständig getrennt, an den Filterkuchen vorbei und erwärmt diese dabei. Das Pressmedium steht dabei unter einem ausreichend hohen Druck, um den Kontakt der Membranen mit den Filterkuchen zu gewährleisten. Die Filterkuchen können ein- oder beidseitig beheizt werden. Günstig hinsichtlich der Trocknungsdauer ist die beidseitige Beheizung.

Zur Unterstützung des Trocknungsvorgangs liegt filtratseitig Vakuum an. Dieses Vakuum kann beispielsweise durch eine Flüssigkeitsringpumpe erzeugt werden. Der abgesaugte Brüdenstrom wird vor der Vakuumpumpe gekühlt, um die flüchtigen Bestandteile (z.B. tert.-Butanol und Wasser) auszukondensieren. Mess- und Regelgrößen sind die auskondensierte Menge, der Druck im Filtratsystem der Presse und die Filterkuchentemperatur.

Im beschriebenen Verfahren betragen die Membranpressdrücke bevorzugt 0,1 bar bis 10 bar. Temperaturen des Press- und Heizmediums betragen 30°C bis 80°C, bevorzugt 40°C bis 60°C. Der filtratseitige Druck ist bevorzugt kleiner als 100 mbar. Die Durchflussrate des Heizmediums ist dabei so hoch zu wählen, dass ein guter Wärmeübergang zwischen Heizmedium und Produkt erfolgt. Trocknungszeiten betragen i.A. einige Minuten bis mehrere Stunden, üblicherweise eine bis zehn Stunden. Restfeuchten unterhalb der Spezifikationsgrenze von ca. 5% werden mit dieser Art der Trocknung sicher erreicht.

In weiteren Verfahrensschritten kann das so isolierte und von Nebenkomponenten befreite Produkt gemahlen und verpackt werden.

Durch dieses verbesserte Herstellverfahren für DMC-Katalysatoren ist im Vergleich zum Stand der Technik eine deutliche Verkürzung der Prozesszeiten der DMC-Katalysatorherstellung möglich. Da DMC-Katalysatoren, die nach dem neuen, verbesserten Verfahren hergestellt werden, bei der Polyetherpolyolherstellung vergleichbare Aktivität besitzen wie DMC-Katalysatoren, die nach dem bisherigen Stand der Technik wesentlich aufwendiger hergestellt werden, führt dies zu einer wesentlich erhöhten Wirtschaftlichkeit des DMC-katalysierten Verfahrens zur Herstellung von Polyetherpolyolen.

Die nach dem erfindungsgemäßen Verfahren hergestellten DMC-Katatysatoren können wegen ihrer außerordentlich hohen Aktivität häufig in sehr niedrigen Konzentrationen eingesetzt werden (25 ppm und weniger, bezogen auf die Menge des herzustellenden Polyetherpolyols). Werden die in Gegenwart der nach dem erfindungsgemäßen Verfahren hergestellten DMC-Katalysatoren hergestellten Polyetherpolyole zur Herstellung von Polyurethanen verwendet, kann auf eine Entfernung des Katalysators aus dem Polyetherpolyol verzichtet werden, ohne dass die Produktqualitäten des erhaltenen Polyurethans nachteilig beeinflusst werden.

### Beispiele

### Katalysatorherstellung

### Beispiel 1 (Vergleichsbeispiel): Katalysator A

### (Katalysatorherstellung mit einmaliger Wäsche des Filterkuchens durch Redispergieren mit anschließender Filtration)

In einem Schlaufenreaktor, der einen Strahldispergator (1 Bohrung mit Durchmesser 0,7 mm) enthält, wurde eine Lösung aus 81,25 g Zinkchlorid in 810 g destilliertem Wasser bei 45°C zirkuliert. Zu dieser Lösung wurde eine Lösung aus 26 g Kaliumhexacyanocobaltat in 200 g destilliertem Wasser zudosiert. Der Druckverlust im Strahldispergator betrug dabei 2,5 bar. Unmittelbar nach der Fällung wurde eine Mischung aus 325 g tert.-Butanol und 325 g destilliertem Wasser zudosiert und die Dispersion 80 min bei 45°C und einem Druckverlust im Strahldispergator von 2,5 bar zirkuliert. Dann wurde eine Mischung aus 6,5 g Cholsäure-Natriumsalz, 6,5 g tert.-Butanol und 650 g destilliertem Wasser zudosiert und die Dispersion anschließend 20 min bei einem Druckverlust im Strahldispergator von 2,5 bar zirkuliert. Der Feststoff wurde durch eine Filtration über eine Vakuumfilternutsche isoliert. Anschließend wurde der feuchte Filterkuchen mit einer Mischung aus 13 g Cholsäure-Natriumsalz, 455 g tert.-Butanol und 195 g destilliertem Wasser durch Zirkulieren im Schlaufenreaktor bei einem Druckverlust im Strahldispergator von 2,5 bar 20 min bei 45°C gewaschen. Der Feststoff wurde erneut über eine Vakuumfilternutsche filtriert und der feuchte Filterkuchen anschließend bei 100°C 5 h im Hochvakuum getrocknet.

### Beispiel 2 (Vergleichsbeispiel): Katalysator B

### (Katalysatorherstellung mit zweimaliger Wäsche des Filterkuchens durch Redispergieren mit anschließender Filtration)

In einem Schlaufenreaktor, der einen Strahldispergator (1 Bohrung mit Durchmesser 0,7 mm) enthält, wird eine Lösung aus 81,25 g Zinkchlorid in 810 g destilliertem Wasser bei 45°C zirkuliert. Zu dieser Lösung wurde eine Lösung aus 26 g Kaliumhexacyanocobaltat in 200 g destilliertem Wasser zudosiert. Der Druckverlust im Strahldispergator betrug dabei 2,5 bar. Unmittelbar nach der Fällung wurde eine Mischung aus 325 g tert.-Butanol und 325 g destilliertem Wasser zudosiert und die Dispersion 80 min bei 45°C und einem Druckverlust im Strahldispergator von 2,5 bar zirkuliert. Dann wurde eine Mischung aus 6,5 g Cholsäure-Natriumsalz, 6,5 g tert.-Butanol und 650 g destilliertem Wasser zudosiert und die Dispersion anschließend 20 min bei einem Druckverlust im Strahldispergator von 2,5 bar zirkuliert. Der Feststoff wurde durch eine Filtration über eine Vakuumfilternutsche isoliert. Anschließend wurde der feuchte Filterkuchen mit einer Mischung aus 13 g Cholsäure-Natriumsalz, 455 g tert.-Butanol und 195 g destilliertem Wasser durch Zirkulieren im Schlaufenreaktor bei einem Druckverlust im Strahldispergator von 2,5 bar 20 min bei 45°C gewaschen. Der Feststoff wurde erneut über eine Vakuumfilternutsche filtriert und der feuchte Filterkuchen abschließend noch einmal mit einer Mischung aus 4,8 g Cholsäure-Natriumsalz, 650 g tert.-Butanol und 65 g destilliertem Wasser durch Zirkulieren im Schlaufenreaktor bei einem Druckverlust im Strahldispergator von 2,5 bar 20 min bei 45°C gewaschen. Nach erneuter Filtration über eine Vakuumfilternutsche wurde der gewaschene, feuchte Filterkuchen bei 100°C 5 h im Hochvakuum getrocknet.

### Beispiel 3: Katalysator C

### (Katalysatorherstellung mit einfacher Filterkuchenwäsche)

In einem Schlaufenreaktor, der einen Strahldispergator (1 Bohrung mit Durchmesser 0,7 mm) enthält, wurde eine Lösung aus 81,25 g Zinkchlorid in 810 g destilliertem Wasser bei 45°C zirkuliert. Zu dieser Lösung wurde eine Lösung aus 26 g Kaliumhexacyanocobaltat in 200 g destilliertem Wasser zudosiert. Der Druckverlust im Strahldispergator betrug dabei 2,5 bar. Unmittelbar nach der Fällung wurde eine Mischung aus 325 g tert.-Butanol und 325 g destilliertem Wasser zudosiert und die Dispersion 80 min bei 45°C und einem Druckverlust im Strahldispergator von 2,5 bar zirkuliert. Dann wurde eine Mischung aus 6,5 g Cholsäure-Natriumsalz, 6,5 g tert.-Butanol und 650 g destilliertem Wasser zudosiert und die Dispersion anschließend 20 min bei einem Druckverlust im Strahldispergator von 2,5 bar zirkuliert. 350 g dieser Dispersion wurden in einer Druckfilternutsche bei einem Überdruck von 2,0 bar filtriert. Anschließend wurde der feuchte Filterkuchen in der Druckfilternutsche bei einem Überdruck von 3,0 bar mit einer Mischung aus 2 g Cholsäure-Natriumsalz, 70 g tert.-Butanol und 30 g destilliertem Wasser durch Filterkuchenwäsche gewaschen. Der gewaschene, feuchte Filterkuchen wurde bei 100°C 5 h im Hochvakuum getrocknet.

### Beispiel 4 (Vergleichsbeispiel): Katalysator D

### (Katalysatorherstellung mit zweimaliger Wäsche des Filterkuchens durch Redispergieren mit anschließender Filtration)

In einem Schlaufenreaktor, der einen Strahldispergator (110 Bohrungen mit Durchmesser 0,7 mm) enthält, wurde eine Lösung aus 1,625 kg Zinkchlorid in 16,2 kg destilliertem Wasser bei 35°C zirkuliert. Zu dieser Lösung wurde eine Lösung aus 0,52 kg Kaliumhexacyanocobaltat in 4,0 kg destilliertem Wasser zudosiert. Der Druckverlust im Strahldispergator betrug dabei 1,2 bar. Unmittelbar nach der Fällung wurde eine Mischung aus 6,5 kg tert.-Butanol und 6,5 kg destilliertem Wasser zudosiert und die Dispersion 20 min bei 35°C und einem Druckverlust im Strahldispergator von 1,2 bar zirkuliert. Dann wurde eine Mischung aus 0,13 kg Cholsäure-Natriumsalz, 0,13 kg tert.-Butanol und 13,0 kg destilliertem Wasser zudosiert und die Dispersion anschließend 10 min bei einem Druckverlust im Strahldispergator von 0,1 bar zirkuliert. Der Feststoff wurde in einer Membranfilterpresse bei einem Überdruck von 2,0 bar filtriert und bei 4,0 bar ausgepresst. Anschließend wurde der feuchte, ausgepresste Filterkuchen mit einer Mischung aus 0,26 kg Cholsäure-Natriumsalz, 9,1 kg tert.-Butanol und 3,9 kg destilliertem Wasser durch Zirkulieren im Schlaufenreaktor bei einem Druckverlust im Strahldispergator von 1,8 bar 20 min bei 35°C gewaschen. Der Feststoff wurde erneut in einer Membranfilterpresse bei einem Überdruck von 2,0 bar filtriert und bei 4,0 bar ausgepresst und der feuchte, ausgepresste Filterkuchen abschließend noch einmal mit einer Mischung aus 0,096 kg Cholsäure-Natriumsalz, 13 kg tert.-Butanol und 1,3 kg destilliertem Wasser durch Zirkulieren im Schlaufenreaktor bei einem Druckverlust im Strahldispergator von 1,8 bar 20 min bei 35°C gewaschen. Nach erneuter Filtration in einer Membranfilterpresse bei 2,0 bar und Auspressen des Filterkuchens bei 4,0 bar wurde der feuchte, ausgepresste Filterkuchen bei 100°C 5 h im Hochvakuum getrocknet.

### Beispiel 5: Katalysator E

### (Katalysatorherstellung mit einfacher Filterkuchenwäsche)

In einem Schlaufenreaktor, der einen Strahldispergator (110 Bohrungen mit Durchmesser 0,7 mm) enthält, wurde eine Lösung aus 1,625 kg Zinkchlorid in 16,2 kg destilliertem Wasser bei 35°C zirkuliert. Zu dieser Lösung wurde eine Lösung aus 0,52 kg Kaliumhexacyanocobaltat in 4,0 kg destilliertem Wasser zudosiert. Der Druckverlust im Strahldispergator betrug dabei 1,2 bar. Unmittelbar nach der Fällung wurde eine Mischung aus 6,5 kg tert.-Butanol und 6,5 kg destilliertem Wasser zudosiert und die Dispersion 20 min bei 35°C und einem Druckverlust im Strahldispergator von 1,2 bar zirkuliert. Dann wurde eine Mischung aus 0,13 kg Cholsäure-Natriumsalz, 0,13 kg tert.-Butanol und 13,0 kg destilliertem Wasser zudosiert und die Dispersion anschließend 10 min bei einem Druckverlust im Strahldispergator von 0,1 bar zirkuliert. Der Feststoff wurde in einer Membranfilterpresse bei einem Überdruck von 2,0 bar filtriert. Anschließend wurde der feuchte Filterkuchen in der Membranfilterpresse bei einem Überdruck von 2,5 bar mit einer Mischung aus 0,22 kg Cholsäure-Natriumsalz, 8,0 kg tert.-Butanol und 3,4 kg destilliertem Wasser durch Filterkuchenwäsche gewaschen und der gewaschene Filterkuchen dann bei 5,0 bar Überdruck ausgepresst. Der feuchte, ausgepresste Filterkuchen wurde bei 100°C 5 h im Hochvakuum getrocknet.

### Beispiel 6: Katalysator F

### (Katalysatorherstellung mit einfacher Filterkuchenwäsche bei Einsatz einer "heißen Filterpresse")

In einem Schlaufenreaktor, der einen Strahldispergator (28 Bohrungen mit Durchmesser 0,7 mm) enthält, wurde eine Lösung aus 6,485 kg Zinkchlorid in 23,9 kg destilliertem Wasser und 3,4 kg tert.-Butanol bei 50°C zirkuliert. Dieser Lösung wurde eine Lösung aus 0,65 kg Kaliumhexacyanocobaltat in 8,0 kg destilliertem Wasser zudosiert. Der Druckverlust im Strahldispergator betrug dabei 2,5 bar. Unmittelbar nach der Fällung wurde eine Mischung aus 0,144 kg tert.-Butanol, 0,685 kg Polypropylenglykol 1000 und 3,98 kg destilliertem Wasser bei einem Druckverlust im Strahldispergator von 0,1 bar zudosiert. Die Dispersion wurde anschließend noch 90 min bei einem Druckverlust im Strahldispergator von 2,5 bar bei 50°C zirkuliert.
58 kg dieser Dispersion wurden in einer Membranfilterpresse (zwei Kammern, Filterfläche 0,6 m²) mit einem konstanten Differenzdruck von 1 bar filtriert (20 min.). Der Filtrationsphase folgte eine Spaltwäsche mit einem Waschflüssigkeitsdruck von 1 bar (30 min.). Hierzu wurden 44 kg Waschlösung eingesetzt (65 Gew.-% tert.-Butanol, 33,7 Gew.-% Wasser, 1,3 Gew.-% Polypropylenglykol 1000). Anschließend wurden die Filterkuchen mit einem Membranpressdruck von 16 bar eine Stunde lang ausgepresst. Nun wurden die Kuchen in der Membranfilterpresse getrocknet. Der Membranpressdruck wurde auf 1 bar eingestellt. Heiz- und Pressmedium war Wasser mit einer Temperatur von 60°C. Filtratseitig lag ein Druck von anfangs 50 mbar und gegen Ende der Trocknung 30 mbar an. Nach einer Trocknungszeit von 5,5 Stunden betrug die Restfeuchte des Filterkuchens ca. 3%.

### Herstellung von Polyetherpolyolen

### Allgemeine Durchführung

In einem 500 ml Druckreaktor wurden 50 g Polypropylenglykol-Starter (Molekulargewicht = 1 000 g/mol) und 3-5 mg Katalysator (15-25 ppm, bezogen auf die Menge des herzustellenden Polyetherpolyols) unter Schutzgas (Argon) vorgelegt und unter Rühren auf 105°C aufgeheizt. Anschließend wurden 10 g Propylenoxid auf einmal zudosiert. Weiteres Propylenoxid wurde erst dann wieder zudosiert, wenn ein beschleunigter Druckabfall im Reaktor beobachtet wurde. Dieser beschleunigte Druckabfall zeigt an, dass der Katalysator aktiviert ist. Anschließend wurde das restliche Propylenoxid (140 g) kontinuierlich bei einem konstanten Gesamtdruck von 2,5 bar zudosiert. Nach vollständiger Propylenoxid-Dosierung und 2 Stunden Nachreaktionszeit bei 105°C wurden flüchtige Anteile bei 90°C (1 mbar) abdestilliert und das Reaktionsgemisch anschließend auf Raumtemperatur abgekühlt.

Die erhaltenen Polyetherpolyole wurden durch Ermittlung der OH-Zahlen, der Doppelbindungsgehalte und der Viskositäten charakterisiert.

Der Reaktionsverlauf wurde anhand von Zeit-Umsatz-Kurven (Propylenoxid-Verbrauch [g] vs. Reaktionszeit [min]) verfolgt. Aus dem Schnittpunkt der Tangente an den steilsten Punkt der Zeit-Umsatz-Kurve mit der verlängerten Basislinie der Kurve wurde die Induktionszeit bestimmt. Die für die Katalysatoraktivität maßgeblichen Propoxylierungszeiten entsprechen dem Zeitraum zwischen Katalysatoraktivierung (Ende der Induktionsperiode) und dem Ende der Propylenoxid-Dosierung.

### Beispiel 7 (Vergleich): Herstellung von Polyetherpolyol mit Katalysator A (25 ppm)

| | | |
|---|---|---|
| Propoxylierungszeit | | 31 min |
| Polyetherpolyol | OH-Zahl (mg KOH/g) | 28,7 |
| | Doppelbindungsgehalt (mMol/kg) | 6 |
| | Viskosität 25°C (mPas) | 882 |

### Beispiel 8 (Vergleich): Herstellung von Polyetherpolyol mit Katalysator B (25 ppm)

| | | |
|---|---|---|
| Propoxylierungszeit | | 20 min |
| Polyetherpolyol | OH-Zahl (mg KOH/g) | 28,9 |
| | Doppelbindungsgehalt (mMol/kg) | 5 |
| | Viskosität 25°C (mPas) | 893 |

### Beispiel 9: Herstellung von Polyetherpolyol mit Katalysator C (25 ppm)

| | | |
|---|---|---|
| Propoxylierungszeit | | 19 min |
| Polyetherpolyol | OH-Zahl (mg KOH/g) | 29,3 |
| | Doppelbindungsgehalt (mMol/kg) | 5 |
| | Viskosität 25°C (mPas) | 887 |

### Beispiel 10 (Vergleich): Herstellung von Polyetherpolyol mit Katalysator D (25 ppm)

| | | |
|---|---|---|
| Propoxylierungszeit | | 19 min |
| Polyetherpolyol | OH-Zahl (mg KOH/g) | 29,2 |
| | Doppelbindungsgehalt (mMol/kg) | 6 |
| | Viskosität 25°C (mPas) | 832 |

### Beispiel 11: Herstellung von Polyetherpolyol mit Katalysator E (25 ppm)

| | | |
|---|---|---|
| Propoxylierungszeit | | 20 min |
| Polyetherpolyol | OH-Zahl (mg KOH/g) | 28,9 |
| | Doppelbindungsgehalt (mMol/kg) | 6 |
| | Viskosität 25°C (mPas) | 869 |

### Beispiel 12: Herstellung von Polyetherpolyol mit Katalysator F (25 ppm)

| | | |
|---|---|---|
| Propoxylierungszeit | | 14 min |
| Polyetherpolyol | OH-Zahl (mg KOH/g) | 30,0 |
| | Doppelbindungsgehalt (mMol/kg) | 6 |
| | Viskosität 25°C (mPas) | 809 |

### Beispiel 13: Herstellung von Polyetherpolyol mit Katalysator F (15 ppm)

| | | |
|---|---|---|
| Propoxylierungszeit | | 23 min |
| Polyetherpolyol | OH-Zahl (mg KOH/g) | 29,3 |
| | Doppelbindungsgehalt (mMol/kg) | 5 |
| | Viskosität 25°C (mPas) | 881 |

## Patentansprüche

1. Verfahren zur Herstellung von DMC-Katalysatoren, bei dem
A) wässrige Lösungen von Metallsalzen mit wässrigen Lösungen von Metallcyanidsalzen in Gegenwart organischer Komplexliganden unter Bildung einer DMC-Katalysatordispersion umgesetzt werden,
B) die gebildete Dispersion filtriert wird,
C) der erhaltene Filterkuchen mit Lösungen organischer Komplexliganden durch als Durchströmungswäsche durchgeführte Filterkuchenwäsche gewaschen wird, und
D) der gewaschene Filterkuchen getrocknet wird.

2. Verfahren gemäß Anspruch 1, bei dem Schritt A) in Gegenwart eines organischen Komplexliganden a) und einer oder mehrerer weiterer, von a) verschiedener Komplexliganden b) durchgeführt wird.

3. Verfahren gemäß Anspruch 1 oder 2, bei dem in Schritt C) der Filterkuchen mit einer wässrigen Lösung eines organischen Komplexliganden a) und gegebenenfalls eines oder mehrerer weiterer, von a) verschiedener Komplexliganden b) gewaschen wird.

4. Verfahren gemäß Anspruch 1 oder 2, bei dem in Schritt C) der Filterkuchen mit einer nichtwässrigen Lösung eines organischen Komplexliganden a) und gegebenenfalls eines oder mehrerer weiterer, von a) verschiedener Komplexliganden b) - gewaschen wird.

5. Verfahren gemäß einem der Ansprüche 1 bis 4, bei dem der gewaschene Filterkuchen vor dem Trocknen ausgepresst oder mechanisch entfeuchtet wird.

6. Verfahren gemäß einem der Ansprüche 1 bis 5, bei dem die Schritte B) und C) unter Einsatz einer Filterpresse durchgeführt werden.

7. Verfahren gemäß Anspruch 6, bei dem die Schritte B), C) und D) unter Einsatz einer beheizbaren Filterpresse durchgeführt werden.

8. Verfahren gemäß einem der Anspruch 1 bis 7, bei dem Schritt A) unter Einsatz einer Mischdüse durchgeführt wird.

9. Verfahren gemäß Anspruch 8, bei dem die Mischdüse ein Strahldispergator ist.

## Claims

1. Process for the preparation of DMC catalysts, in which
A) aqueous solutions of metal salts are reacted with aqueous solutions of metal cyanide salts in the presence of organic complexing ligands to form a DMC catalyst dispersion,
B) the dispersion formed is filtered,
C) the filter cake obtained is washed with solutions of organic complexing ligands by a filter cake washing carried out as a flow-through washing and
D) the washed filter cake is dried.

2. Process according to claim 1, in which step A) is carried out in the presence of an organic complexing ligand a) and one or more further complexing ligands b) which differ from a).

3. Process according to claim 1 or 2, in which in step C) the filter cake is washed with an aqueous solution of an organic complexing ligand a) and optionally one or more further complexing ligands b) which differ from a).

4. Process according to claim 1 or 2, in which in step C) the filter cake is washed with a non-aqueous solution of an organic complexing ligand a) and optionally one or more further complexing ligands b) which differ from a).

5. Process according to one of claims 1 to 4, in which the washed filter cake is pressed out or subjected to mechanical removal of moisture before the drying.

6. Process according to one of claims 1 to 5, in which steps B) and C) are carried out using a filter press.

7. Process according to claim 6, in which steps B), C) and D) are carried out using a heatable filter press.

8. Process according to one of claims 1 to 7, in which step A) is carried out using a mixing nozzle.

9. Process according to claim 8, in which the mixing nozzle is a jet disperser.

## Revendications

1. Procédé de préparation de catalyseurs de type DMC, dans lequel
A) on fait réagir des solutions aqueuses de sels métalliques avec des solutions aqueuses de sels de cyanures métalliques en présence de ligands de complexes organiques en formant une dispersion de catalyseur de type DMC,
B) on filtre la dispersion formée,
C) on lave le gâteau de filtration obtenu avec des solutions de ligands de complexes organiques par un lavage du gâteau de filtration effectué sous forme d'un lavage par écoulement à travers le gâteau, et
D) on sèche le gâteau de filtration lavé.

2. Procédé selon la revendication 1, dans lequel l'étape A) s'effectue en présence d'un ligand de complexe organique a) et d'un ou plusieurs autres ligands de complexes b) différents de a).

3. Procédé selon la revendication 1 ou 2, dans lequel, dans l'étape C), on lave le gâteau de filtration avec une solution aqueuse d'un ligand de complexe organique a) et éventuellement d'un ou plusieurs autres ligands de complexes b) différents de a).

4. Procédé selon la revendication 1 ou 2, dans lequel, dans l'étape C), on lave le gâteau de filtration avec une solution non aqueuse d'un ligand de complexe organique a) et éventuellement d'un ou plusieurs autres ligands de complexes b) différents de a).

5. Procédé selon l'une des revendications 1 à 4, dans lequel, avant le séchage, on presse le gâteau de filtration lavé ou on le déshydrate mécaniquement.

6. Procédé selon l'une des revendications 1 à 5. dans lequel on effectue les étapes B) et C) en utilisant un filtre-presse.

7. Procédé selon la revendication 6, dans lequel on effectue les étapes B, C) et D) en utilisant un filtre-presse pouvant être chauffé.

8. Procédé selon l'une des revendications 1 à 7, dans lequel on effectue l'étape A) en utilisant une buse mélangeuse.

9. Procédé selon la revendication 8, dans lequel la buse mélangeuse est un disperseur à jet.
